# FASCICULE DE BREVET EUROPEEN

(11) **EP 2 000 060 B1**
(45) Date de publication et mention de la délivrance du brevet: **28.09.2011**
(21) Numéro de dépôt: 08356075.5
(22) Date de dépôt: 02.06.2008
(51) Int. Cl.: A47J 27/04

(54) **Dispositif de production de vapeur pour cuiseur vapeur avec maintien au chaud**
Gerät zur Dampfherstellung für Dampfkochgeräte mit Warmhaltefunktion
Device for producing steam for steam cooker with holding warm function

(30) Priorité: 04.06.2007 FR 0703941
(43) Date de publication de la demande: 10.12.2008
(73) Titulaire: Seb S.A., 69130 Ecully (FR)
(72) Inventeur: Dumoux, Philippe, 21120 Gemeaux (FR)
(74) Mandataire: Kiehl, Hubert

(56) Documents cités:
- GB-A- 2 198 631
- US-A- 2 279 196

## Description

La présente invention concerne le domaine technique des appareils électroménagers de cuisson à la vapeur, appelés également cuiseurs vapeur.

La présente invention concerne plus particulièrement le dispositif de production de vapeur d'un cuiseur vapeur, et se rapporte au fonctionnement à puissance réduite utilisé pour réaliser un maintien au chaud des aliments.

II est connu du document GB 2 198 631 un appareil électroménager de cuisson à la vapeur dans lequel la puissance est réduite au cours du fonctionnement de l'appareil. La réduction de puissance peut être commandée par un minuteur ou par un détecteur de vapeur. La puissance réduite peut être obtenue par alternance de périodes d'alimentation et de périodes de non alimentation, ou encore par contrôle de phase, ou encore par l'utilisation d'un élément chauffant bi-puissance.

L'utilisation d'un élément chauffant bi-puissance présente l'inconvénient de renchérir le coût de l'élément chauffant, et d'être peu adaptable, puisque la puissance réduite est fixée par construction.

L'utilisation d'un contrôle de phase nécessite une électronique de commande sophistiquée et peut présenter des problèmes de compatibilité électromagnétique.

L'utilisation d'une commande marche-arrêt est plus simple à mettre en oeuvre mais nécessite encore une électronique de commande.

Aucune des réalisations proposées n'est vraiment économique à réaliser.

Un but de la présente invention est de proposer un dispositif de production de vapeur pour un appareil électroménager de cuisson à la vapeur, qui permette un maintien au chaud, et qui présente une construction économique.

Un autre but de la présente invention est de proposer un dispositif de production de vapeur pour un appareil électroménager de cuisson à la vapeur, qui comporte un maintien au chaud débrayable.

Un autre but de la présente invention est de proposer une base chauffante pour appareil électroménager de cuisson à la vapeur, qui permette un maintien au chaud, et qui présente une construction économique.

Un autre but de la présente invention est de proposer une base chauffante pour appareil électroménager de cuisson à la vapeur, qui comporte un maintien au chaud débrayable.

Un autre but de la présente invention est de proposer un appareil électroménager de cuisson à la vapeur, qui permette un maintien au chaud, et qui présente une construction économique.

Un autre but de la présente invention est de proposer un appareil électroménager de cuisson à la vapeur, qui comporte un maintien au chaud débrayable.

Les buts assignés à l'invention sont atteints avec un dispositif de production de vapeur pour un appareil électroménager de cuisson à la vapeur, ledit dispositif de production de vapeur comportant un réservoir d'eau associé à un élément chauffant contrôlé par des moyens de pilotage, du fait que les moyens de pilotage comprennent un dispositif de commande prévu pour court-circuiter un thermostat de maintien au chaud associé thermiquement à l'élément chauffant et présentant une température de consigne adaptée pour alimenter l'élément chauffant cycliquement en présence d'eau dans le réservoir d'eau. Lorsque le thermostat de maintien au chaud est activé, l'élément chauffant n'est pas alimenté en continu car la température de consigne du thermostat de maintien au chaud est atteinte avant que la température de l'élément chauffant ne se stabilise. De ce fait, la production de vapeur est intermittente. Lorsque le thermostat de maintien au chaud est court-circuité, donc désactivé, l'élément chauffant peut notamment être alimenté en continu. Toutefois, un thermostat additionnel, notamment un thermostat de sécurité de chauffe à sec peut être également prévu pour un fonctionnement lorsque le thermostat de maintien au chaud n'est pas activé.

Selon un mode de réalisation, le dispositif de commande est formé par un interrupteur de commande monté en parallèle avec le thermostat de maintien au chaud.

Selon un autre mode de réalisation le dispositif de commande est formé par un commutateur prévu pour alimenter dans une première position le thermostat de maintien au chaud et dans une deuxième position une dérivation électrique parallèle au thermostat de maintien au chaud.

Avantageusement, les moyens de pilotage comprennent une minuterie associée au dispositif de commande. En alternative, une minuterie indépendante des moyens de pilotage pourrait être envisagée.

Avantageusement alors, les moyens de pilotage comprennent un interrupteur de sélection monté en série avec le thermostat de maintien au chaud. En d'autres termes, le thermostat de maintien au chaud peut être activé ou désactivé par l'utilisateur.

Avantageusement encore les moyens de pilotage comprennent un bouton de sélection prévu pour actionner l'interrupteur de sélection ou l'interrupteur de commande ou l'interrupteur de sélection ou le commutateur, ledit bouton de sélection portant un dispositif indicateur lumineux visible seulement lorsque le bouton de sélection occupe une position dans laquelle le thermostat de maintien au chaud est susceptible d'être alimenté. Cette disposition permet de simplifier le câblage du dispositif indicateur lumineux associé au thermostat de maintien au chaud.

Selon une réalisation préférée le bouton de sélection est monté rotatif.

Les buts assignés à l'invention sont atteints également avec une base chauffante pour appareil électroménager de cuisson à la vapeur, dans laquelle est logé un dispositif de production de vapeur selon tout ou partie des caractéristiques précitées.

Les buts assignés à l'invention sont atteints également avec un appareil électroménager de cuisson à la vapeur comportant une enceinte de cuisson disposée au dessus d'une base chauffante selon la caractéristique précitée.

Les buts assignés à l'invention sont atteints également avec un appareil électroménager de cuisson à la vapeur comprenant un dispositif de production de vapeur selon tout ou partie des caractéristiques précitées et une enceinte de cuisson alimentée en vapeur par ledit dispositif de production de vapeur.

L'invention sera mieux comprise à l'étude de quatre exemples de réalisation, pris à titre nullement limitatif, illustrés dans les figures annexées, dans lesquelles :
- la figure 1 est une vue en coupe et en perspective partiellement éclatée d'un exemple de réalisation d'un appareil électroménager de préparation culinaire comportant une base chauffante présentant un dispositif de production de vapeur selon l'invention,
- la figure 2 est une vue en perspective de dessous de la base chauffante illustrée à la figure 1,
- la figure 3 est une vue partielle de la base chauffante illustrée à la figure 1, montrant le bouton de sélection dans une position « sans maintien au chaud », dans laquelle le maintien au chaud n'est pas activé,
- la figure 4 est une vue partielle de la base chauffante illustrée à la figure 1, montrant le bouton de sélection dans une position « avec maintien au chaud », dans laquelle le maintien au chaud est activé,
- la figure 5 est une vue du câblage électrique de l'élément chauffant et des moyens de pilotage du dispositif de production de vapeur de la base chauffante illustrée à la figure 1,
- la figure 6 est une vue du câblage électrique de l'élément chauffant et des moyens de pilotage d'un dispositif de production de vapeur d'une base chauffante selon un deuxième exemple de réalisation.
- la figure 7 est une vue du câblage électrique de l'élément chauffant et des moyens de pilotage d'un dispositif de production de vapeur d'une base chauffante selon un troisième exemple de réalisation.
- la figure 8 est une vue du câblage électrique de l'élément chauffant et des moyens de pilotage d'un dispositif de production de vapeur d'une base chauffante selon un quatrième exemple de réalisation.

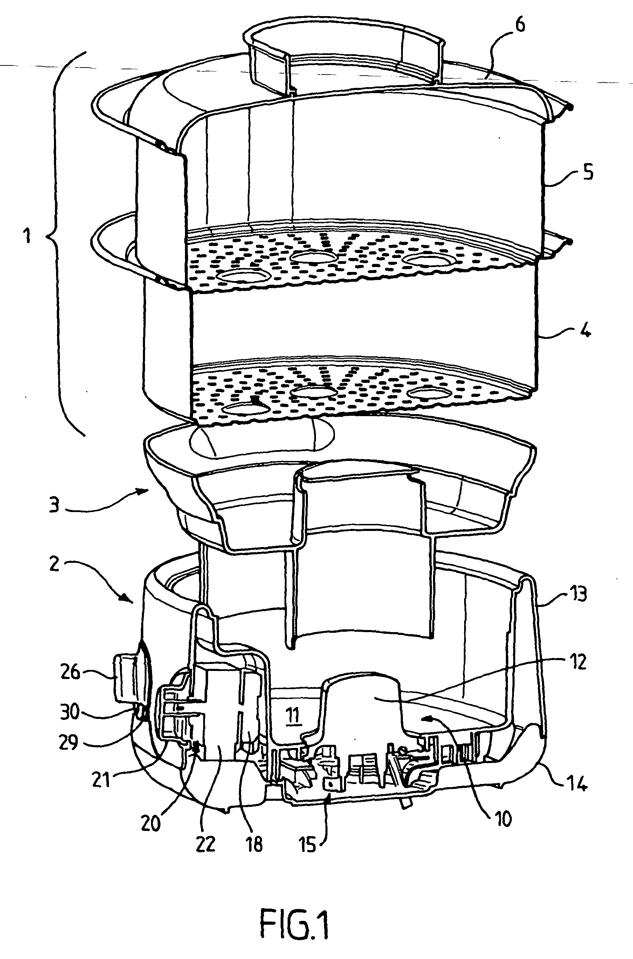

L'appareil électroménager de préparation culinaire illustré à la figure 1 comporte une enceinte de cuisson 1 alimentée en vapeur par un dispositif de production de vapeur 10.

L'enceinte de cuisson 1 est disposée au dessus d'une base chauffante 2. Un bac récupérateur à jus 3 est intercalé entre l'enceinte de cuisson 1 et la base chauffante 2. L'enceinte de cuisson 1 comporte deux éléments de cuisson superposés 4, 5 et un couvercle 6.

Le dispositif de production de vapeur 10 comporte un réservoir d'eau 11 associé à un élément chauffant 12 contrôlé par des moyens de pilotage 15. Le dispositif de production de vapeur 10 est logé dans la base chauffante 2. La base chauffante 2 comprend un élément de boîtier supérieur 13 formant le réservoir d'eau 11, et un élément de boîtier inférieur 14. L'élément chauffant 12 est monté dans le fond du réservoir d'eau 11.

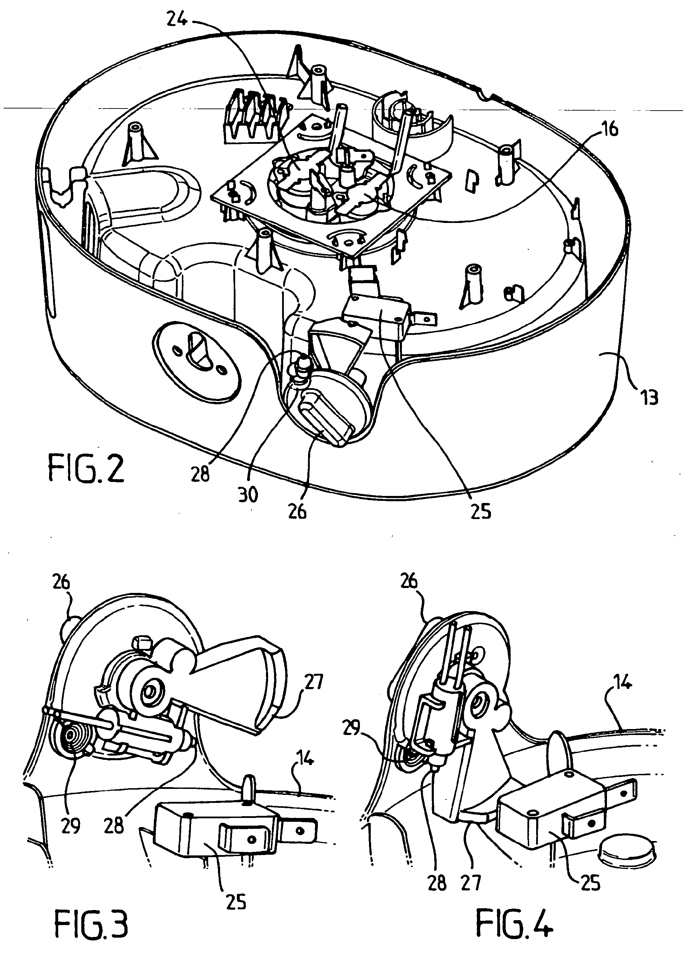

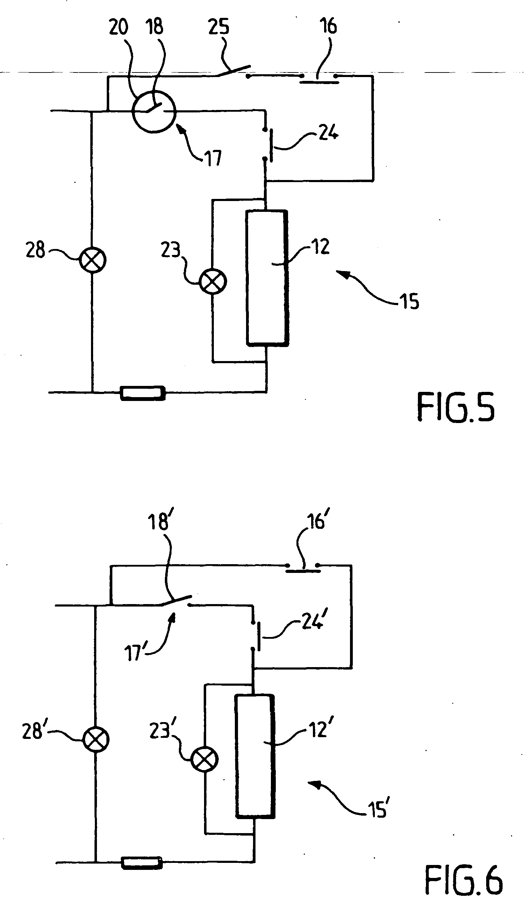

Les moyens de pilotage 15 comprennent un thermostat de maintien au chaud 16, mieux visible sur les figures 2 et 5. Le thermostat de maintien au chaud 16 est associé thermiquement à l'élément chauffant 12. Le thermostat de maintien au chaud 16 présente une température de consigne adaptée pour alimenter l'élément chauffant 12 cycliquement en présence d'eau dans le réservoir d'eau 11. De préférence la température de consigne du thermostat de maintien au chaud 16 est prévue pour obtenir une température dans l'enceinte de cuisson 1 qui soit comprise entre 63°C et 80°C, pour garantir une température suffisante pour le maintien au chaud tout en évitant une poursuite de la cuisson des aliments.

Par exemple, pour un volume de l'enceinte de cuisson 1 de 9 litres, avec un élément chauffant d'une puissance nominale de 900 W procurant un débit maximal de vapeur d'environ 20 g / min, un maintien au chaud à environ 75°C dans l'enceinte de cuisson 1 est obtenu avec une température de consigne du thermostat de maintien au chaud 16 d'environ 114°C correspondant à une température de l'élément chauffant 12 de 127°C. En régime de maintien au chaud le thermostat de maintien au chaud 16 alimente l'élément chauffant 12 par périodes. La puissance moyenne délivrée par l'élément chauffant 12 est alors d'environ 30% de la puissance nominale. En régime stabilisé de cuisson, la température de l'élément chauffant 12 atteint 135°C. La température au niveau du thermostat de maintien au chaud 16, alors inactif, atteint environ 120°C.

Les moyens de pilotage 15 comprennent un dispositif de commande 17 prévu pour court-circuiter le thermostat de maintien au chaud 16. Selon l'exemple de réalisation illustré aux figures 1 à 5, le dispositif de commande 17 est formé par un interrupteur de commande 18 monté en parallèle avec le thermostat de maintien au chaud 16.

Les moyens de pilotage 15 comprennent une minuterie 20 associée au dispositif de commande 17. Tel que visible sur la figure 5, la minuterie 20 est montée en série avec l'élément chauffant 12. Tel que représenté schématiquement sur la figure 1, la minuterie 20 comporte un bouton de réglage 21 associé à un mécanisme d'horlogerie 22 commandant l'interrupteur de commande 18. Le thermostat de maintien au chaud 16 est monté en parallèle avec la minuterie 20.

Un témoin de fonctionnement lumineux 23 est associé à l'élément chauffant 12. Un thermostat de sécurité chauffe à sec 24 est monté en série avec la minuterie 20. Le thermostat de sécurité chauffe à sec 24 présente une température de consigne adaptée pour autoriser l'alimentation de l'élément chauffant 12 en présence d'eau dans le réservoir d'eau 11. Le thermostat de sécurité chauffe à sec 24 présente une température de consigne plus élevée que la température de consigne du thermostat de maintien au chaud 16. La température de consigne du thermostat de chauffe à sec est par exemple de l'ordre de 145°C.

Les moyens de pilotage 15 comprennent un interrupteur de sélection 25 associé au thermostat de maintien au chaud 16. Tel que représenté sur la figure 5, l'interrupteur de sélection 25 est monté en série avec le thermostat de maintien au chaud 16. Ainsi le thermostat de maintien au chaud 16 est débrayable. Tel que mieux visible sur la figure 2, l'interrupteur de sélection 25 est monté sous l'élément de boîtier supérieur 13.

Les moyens de pilotage 15 comprennent un bouton de sélection 26 prévu pour actionner l'interrupteur de sélection 25. A cet effet le bouton de sélection 26 présente une surface de came 27 prévue pour coopérer avec l'interrupteur de sélection 25. Le bouton de sélection 26 est monté rotatif. Tel que mieux visible sur les figures 3 et 4, le bouton de sélection 26 est monté mobile en rotation sur l'élément de boîtier inférieur 14.

Les moyens de pilotage 15 comprennent un dispositif indicateur lumineux 28 prévu pour indiquer un fonctionnement avec maintien au chaud. Plus particulièrement, selon le mode de réalisation illustré aux figures 1 à 5, le dispositif indicateur lumineux 28 est monté en parallèle avec l'élément chauffant 12 et la minuterie 20. Le bouton de sélection 26 porte le dispositif indicateur lumineux 28.

Lorsque le bouton de sélection 26 occupe la position « sans maintien au chaud », illustrée sur la figure 3, le dispositif indicateur lumineux 28 est disposé derrière une paroi de l'élément de boîtier inférieur 14.

Lorsque le bouton de sélection 26 occupe la position « avec maintien au chaud », illustrée sur la figure 4, le dispositif indicateur lumineux 28 est disposé derrière une zone de visualisation 29 transparente ou translucide de la base chauffante 2. Plus particulièrement, la zone de visualisation 29 transparente ou translucide est ménagée dans une paroi de l'élément de boîtier inférieur 14. Le bouton de sélection 26 comporte une encoche 30 agencée en regard de la zone de visualisation 29 lorsque le bouton de sélection 26 occupe la position « avec maintien au chaud ». Ainsi le dispositif indicateur lumineux 28 est visible seulement lorsque le bouton de sélection 26 occupe une position dans laquelle le thermostat de maintien au chaud 16 est susceptible d'être alimenté.

Le fonctionnement de cet exemple de réalisation est le suivant.

L'utilisateur remplit le réservoir d'eau 11, met en place le bac récupérateur à jus 3 sur la base chauffante 2, l'enceinte de cuisson 1 sur le bac récupérateur à jus 3, et les aliments à cuire dans l'enceinte de cuisson 1, et règle le temps de cuisson avec la minuterie 20.

Si désiré, l'utilisateur peut programmer un maintien au chaud après la cuisson, dès le début de la cuisson ou à tout moment au cours de la cuisson, en plaçant le bouton de sélection 26 en position « avec maintien au chaud ». L'interrupteur de sélection 25 est alors fermé.

Lorsque le temps de cuisson est écoulé, la minuterie 20 coupe l'alimentation de l'élément chauffant 12 passant par le thermostat de sécurité chauffe à sec 24.

Lorsque le bouton de sélection 26 est en position « avec maintien au chaud », le thermostat de maintien au chaud 16 demeure passant par intermittence et permet d'obtenir une production de vapeur autorisant un maintien au chaud des aliments présents dans l'enceinte de cuisson 1. Le calibrage du thermostat de maintien au chaud 16 en fonction de la proximité et de la puissance de l'élément chauffant 12, ainsi que du volume de l'enceinte de cuisson 1, permet d'obtenir une température dans l'enceinte de cuisson 1 comprise entre 63°C et 80°C adaptée à un maintien au chaud des aliments.

Un deuxième exemple de réalisation est illustré à la figure 6.

Cet exemple de réalisation diffère du premier exemple de réalisation illustré à la figure 5 en ce que le dispositif de commande 17' est formé par un interrupteur de commande 18' monté en parallèle avec le thermostat de maintien au chaud 16' et en ce que les moyens de pilotage 15' sont dépourvus de minuterie associée au dispositif de commande 17'. L'interrupteur de commande 18' est monté en série avec le thermostat de sécurité chauffe à sec 24'.

Si désiré, une minuterie indépendante du circuit électrique peut être intégrée ou associée à la base chauffante 2.

Les moyens de pilotage 15' comprennent le bouton de sélection 26, visible sur les figures 3 et 4. Le bouton de sélection 26 est prévu pour actionner l'interrupteur de commande 18' remplaçant l'interrupteur de sélection 25 du premier exemple de réalisation.

Le bouton de sélection 26 peut porter le dispositif indicateur lumineux 28' prévu pour indiquer un fonctionnement en mode « maintien au chaud ». Le dispositif indicateur lumineux 28' est alors visible seulement lorsque le bouton de sélection 26 occupe une position dans laquelle le thermostat de maintien au chaud 16' est susceptible d'être alimenté.

Le fonctionnement de ce deuxième exemple de réalisation est le suivant.

Pour démarrer la cuisson, l'utilisateur place l'interrupteur de commande 18' en position fermée à l'aide du bouton de sélection 26. L'élément chauffant 12' est alors alimenté en mode « cuisson » par le thermostat de sécurité chauffe à sec 24' même si le thermostat de maintien au chaud 16' est ouvert. Le témoin de fonctionnement lumineux 23' indique l'alimentation de l'élément chauffant 12'.

Pour passer du mode « cuisson » au mode « maintien au chaud », l'utilisateur place l'interrupteur de commande 18' en position ouverte. L'élément chauffant 12' est alors alimenté par le thermostat de maintien au chaud 16'.

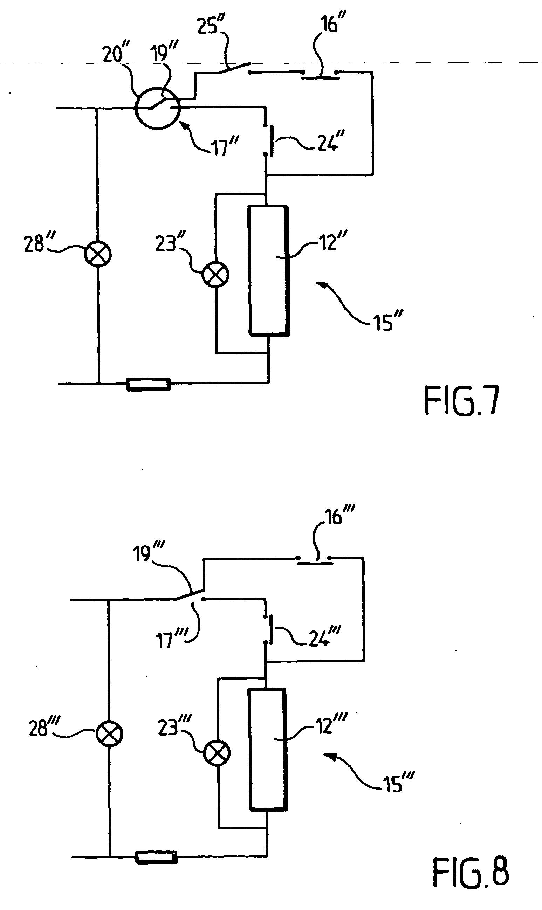

Un troisième exemple de réalisation est illustré à la figure 7.

Cet exemple de réalisation diffère du premier exemple de réalisation illustré à la figure 5 en ce que le dispositif de commande 17" est formé par un commutateur 19" prévu pour alimenter dans une première position le thermostat de maintien au chaud 16" et dans une deuxième position une dérivation électrique parallèle au thermostat de maintien au chaud 16", dans laquelle est placé le thermostat de sécurité chauffe à sec 24". Le commutateur 19" remplace l'interrupteur de commande 18 du premier exemple de réalisation illustré à la figure 5.

Dans cet exemple de réalisation, de même que dans le premier exemple de réalisation, les moyens de pilotage 15" comprennent une minuterie 20" associée au dispositif de commande 17". Les moyens de pilotage 15" comprennent un interrupteur de sélection 25" monté en série avec le thermostat de maintien au chaud 16".

Les moyens de pilotage 15" peuvent comprendre le bouton de sélection 26, visible sur les figures 3 et 4. Le bouton de sélection 26 est alors prévu pour actionner l'interrupteur de sélection 25" remplaçant l'interrupteur de sélection 25. Le bouton de sélection 26 peut porter le dispositif indicateur lumineux 28" prévu pour indiquer un fonctionnement avec maintien au chaud. Le dispositif indicateur lumineux 28" est alors visible seulement lorsque le bouton de sélection 26 occupe une position dans laquelle le thermostat de maintien au chaud 16" est susceptible d'être alimenté.

Le fonctionnement de ce troisième exemple de réalisation est comparable au fonctionnement du premier exemple de réalisation. Le commutateur 19" en position de cuisson alimente le thermostat de sécurité chauffe à sec 24". Le commutateur 19" en position de maintien au chaud alimente le thermostat de maintien au chaud 16". Le témoin de fonctionnement lumineux 23" indique l'alimentation de l'élément chauffant 12". Le passage du mode « cuisson » au mode « maintien au chaud » s'effectue automatiquement lorsque la minuterie 20" a décompté le temps programmé si l'interrupteur de sélection 25" est en configuration « avec maintien au chaud ».

Un quatrième exemple de réalisation est illustré à la figure 8.

Cet exemple de réalisation diffère du deuxième exemple de réalisation illustré à la figure 6 en ce que le dispositif de commande 17"' est formé par un commutateur 19"' prévu pour alimenter dans une première position le thermostat de maintien au chaud 16"' et dans une deuxième position une dérivation électrique parallèle au thermostat de maintien au chaud 16"', dans laquelle est placé le thermostat de sécurité chauffe à sec 24"'. Ainsi le commutateur 19"' remplace l'interrupteur de commande 18' du deuxième exemple de réalisation illustré à la figure 6.

Si désiré, une minuterie indépendante du circuit électrique peut être intégrée ou associée à la base chauffante 2.

Les moyens de pilotage 15"' comprennent le bouton de sélection 26, visible sur les figures 3 et 4. Le bouton de sélection 26 est prévu pour actionner le commutateur 19"' remplaçant l'interrupteur de commande 18' du deuxième exemple de réalisation. Le bouton de sélection 26 peut porter le dispositif indicateur lumineux 28"' prévu pour indiquer un fonctionnement en mode maintien au chaud. Le dispositif indicateur lumineux 28"' est alors visible seulement lorsque le bouton de sélection 26 occupe une position dans laquelle le thermostat de maintien au chaud 16"' est susceptible d'être alimenté.

Le fonctionnement de ce quatrième exemple de réalisation est comparable au fonctionnement du deuxième exemple de réalisation.

Pour démarrer la cuisson, l'utilisateur place le commutateur 19"' en position de cuisson à l'aide du bouton de sélection 26, dans laquelle le commutateur 19"' alimente le thermostat de sécurité chauffe à sec 24"'. L'élément chauffant 12"' est alors alimenté en mode « cuisson » par le thermostat de sécurité chauffe à sec 24"' même si le thermostat de maintien au chaud 16"' est ouvert. Le témoin de fonctionnement lumineux 23"' indique l'alimentation de l'élément chauffant 12"'.

Pour passer du mode « cuisson » au mode « maintien au chaud », l'utilisateur place le commutateur 19"' en position de maintien au chaud, dans laquelle le commutateur 19"' alimente le thermostat de maintien au chaud 16"'. L'élément chauffant 12"' est alors alimenté par le thermostat de maintien au chaud 16"'.

A titre de variante pour le premier et /ou le troisième exemple de réalisation, l'interrupteur de sélection 25 ; 25" pourrait être supprimé. La base chauffante 2 présente alors un maintien au chaud automatique après la cuisson, sans bouton de sélection 26.

A titre de variante complémentaire, les moyens de pilotage 15 ; 15' ; 15" ; 15"' ne comportent pas nécessairement un dispositif indicateur lumineux 28; 28' ; 28" ; 28'''.

A titre de variante complémentaire, l'appareil électroménager de préparation culinaire ne comporte pas nécessairement un bac récupérateur à jus agencé entre l'enceinte de cuisson 1 et la base chauffante 2.

A titre de variante complémentaire, l'appareil électroménager de préparation culinaire ne comporte pas nécessairement une enceinte de cuisson 1 montée amovible sur une base chauffante 2.

La présente invention n'est nullement limitée au mode de réalisation décrit et à ses variantes, mais englobe de nombreuses modifications dans le cadre des revendications.

## Revendications

1. Dispositif de production de vapeur (10) pour un appareil électroménager de cuisson à la vapeur, ledit dispositif de production de vapeur (10) comportant un réservoir d'eau (11) associé à un élément chauffant (12 ; 12' ; 12" ; 12"') contrôlé par des moyens de pilotage (15 ; 15' ; 15" ; 15"'), **caractérisé en ce que** les moyens de pilotage (15 ; 15' ; 15" ; 15"') comprennent un dispositif de commande (17 ; 17' ; 17" ; 17"') prévu pour court-circuiter un thermostat de maintien au chaud (16; 16' ; 16" ; 16"') associé thermiquement à l'élément chauffant (12 ; 12' ; 12" ; 12"') et présentant une température de consigne adaptée pour alimenter l'élément chauffant (12 ; 12' ; 12" ; 12"') cycliquement en présence d'eau dans le réservoir d'eau (11).

2. Dispositif de production de vapeur (10) selon la revendication 1, **caractérisé en ce que** le dispositif de commande (17 ; 17') est formé par un interrupteur de commande (18 ; 18') monté en parallèle avec le thermostat de maintien au chaud (16 ; 16').

3. Dispositif de production de vapeur (10) selon la revendication 1, **caractérisé en ce que** le dispositif de commande (17" ; 17"') est formé par un commutateur (19" ; 19"') prévu pour alimenter dans une première position le thermostat de maintien au chaud (16" ; 16"') et dans une deuxième position une dérivation électrique parallèle au thermostat, de maintien au chaud (16" ; 16"').

4. Dispositif de production de vapeur (10) selon l'une des revendications 1 à 3, **caractérisé en ce que** les moyens de pilotage (15 ; 15") comprennent une minuterie (20 ; 20") associée au dispositif de commande (17 ; 17").

5. Dispositif de production de vapeur (10) selon la revendication 4, **caractérisé en ce que** les moyens de pilotage (15 ; 15") comprennent un interrupteur de sélection (25 ; 25") monté en série avec le thermostat de maintien au chaud (16; 16").

6. Dispositif de production de vapeur (10) selon l'une des revendications 2, 3 ou 5, **caractérisé en ce que** les moyens de pilotage (15 ; 15' ; 15" ; 15"') comprennent un bouton de sélection (26) prévu pour actionner l'interrupteur de sélection (25) ou l'interrupteur de commande (18') ou l'interrupteur de sélection (25") ou le commutateur (19"'), ledit bouton de sélection (26) portant un dispositif indicateur lumineux (28 ; 28' ; 28" ; 28"') visible seulement lorsque le bouton de sélection (26) occupe une position dans laquelle le thermostat de maintien au chaud (16 ; 16' ; 16" ; 16"') est susceptible d'être alimenté.

7. Dispositif de production de vapeur (10) selon la revendication 6, **caractérisé en ce que** le bouton de sélection (26) est monté rotatif.

8. Base chauffante (2) pour appareil électroménager de cuisson à la vapeur, dans laquelle est logé un dispositif de production de vapeur (10) comportant un réservoir d'eau (11) associé à un élément chauffant (12) contrôlé par des moyens de pilotage (15 ; 15' ; 15" ; 15"'), **caractérisée en ce que** le dispositif de production de vapeur (10) est conforme à l'une des revendications 1 à 7.

9. Appareil électroménager de cuisson à la vapeur comportant une enceinte de cuisson (1) disposée au dessus d'une base chauffante (2), **caractérisé en ce que** la base chauffante (2) est conforme à la revendication 8.

10. Appareil électroménager de cuisson à la vapeur comprenant un dispositif de production de vapeur (10) comportant un réservoir d'eau (11) associé à un élément chauffant (12 ; 12' ; 12" ; 12"') contrôlé par des moyens de pilotage (15 ; 15' ; 15" ; 15"'), et une enceinte de cuisson (1) alimentée en vapeur par le dispositif de production de vapeur (10), **caractérisé en ce que** le dispositif de production de vapeur (10) est conforme à l'une des revendications 1 à 7.

## Claims

1. A steam producing device (10) for a household steam cooker, said steam producing device (10) comprising a water tank (11) associated with a heating element (12; 12'; 12"; 12"') controlled by control means (15; 15'; 15"; 15"'), **characterised in that** the control means (15; 15'; 15"; 15"') includes a control device (17; 17'; 17"; 17"') designed to short-circuit a keep-warm thermostat (16; 16'; 16"; 16"') thermally associated with the heating element (12; 12'; 12"; 12"') and having a setpoint temperature adapted to supply power to the heating element (12; 12'; 12"; 12"') cyclically when water is present in the water tank (11).

2. A steam producing device (10) according to claim 1, **characterised in that** the control device (17; 17') is formed by a control switch (18; 18') mounted parallel to the keep-warm thermostat (16; 16').

3. A steam producing device (10) according to claim 1, **characterised in that** the control device (17"; 17"') is formed by a changeover switch (19"; 19"') designed to supply power to the keep-warm thermostat (16"; 16"') in a first position and to an electric shunt parallel to the keep-warm thermostat (16"; 16"') in a second position.

4. A steam producing device (10) according to one of claims 1 to 3, **characterised in that** the control means (15; 15") comprises a timer (20; 20") associated with the control device (17; 17").

5. A steam producing device (10) according to claim 4, **characterised in that** the control means (15; 15") comprises a selector switch (25; 25") mounted in series with the keep-warm thermostat (16; 16").

6. A steam producing device (10) according to one of claims 2, 3 or 5, **characterised in that** the control means (15; 15'; 15"; 15"') comprises a selector button (26) designed to actuate the selector switch (25) or the control switch (18') or the selector switch (25") or the changeover switch (19"'), said selector button (26) carrying a light indicator device (28; 28'; 28"; 28"') visible only when the selector button (26) occupies a position wherein the keep-warm thermostat (16; 16'; 16"; 16"') can be powered.

7. A steam producing device (10) according to claim 6, **characterised in that** the selector button (26) is mounted rotatably.

8. A heating base (2) for a household steam cooker, which houses a steam producing device (10) comprising a water tank (11) associated with a heating element (12) controlled by control means (15; 15'; 15"; 15"'), **characterised in that** the steam producing device (10) conforms to one of claims 1 to 7.

9. A household steam cooker comprising a cooking chamber (1) arranged above a heating base (2), **characterised in that** the heating base (2) conforms to claim 8.

10. A household steam cooker comprising a steam producing device (10) comprising a water tank (11) associated with a heating element (12; 12'; 12"; 12"') controlled by control means (15; 15'; 15"; 15"'), and a cooking chamber (1) to which steam is supplied by the steam producing device (10), **characterised in that** the steam producing device (10) conforms to one of claims 1 to 7.

## Patentansprüche

1. Gerät zur Dampfherstellung (10) für ein Elektrohaushaltsgerät zum Dampfgaren, wobei das Gerät zur Dampfherstellung (10) einen Wasserbehälter (11) umfasst, der mit einem Heizelement (12; 12'; 12"; 12"') verbunden ist, das von Steuerungsmitteln (15; 15'; 15"; 15"') geregelt wird, **dadurch gekennzeichnet, dass** die Steuerungsmittel (15; 15'; 15"; 15"') eine Schaltvorrichtung (17; 17'; 17"; 17"') umfassen, die vorgesehen ist, um einen Warmhaltethermostat (16; 16'; 16"; 16"') kurzzuschließen, der mit dem Heizelement (12; 12'; 12"; 12"') thermisch verbunden ist und eine Solltemperatur aufweist, die angepasst ist, um das Heizelement (12; 12'; 12"; 12"') bei Vorhandensein von Wasser im Wasserbehälter (11) zyklisch zu versorgen.

2. Gerät zur Dampfherstellung (10) nach Anspruch 1, **dadurch gekennzeichnet, dass** die Schaltvorrichtung (17; 17') von einem Steuerschalter (18; 18') gebildet wird, der mit dem Warmhaltethermostat (16; 16') parallel geschaltet ist.

3. Gerät zur Dampfherstellung (10) nach Anspruch 1, **dadurch gekennzeichnet, dass** die Schaltvorrichtung (17"; 17"') von einem Umschalter (19"; 19"') gebildet wird, der vorgesehen ist, um in einer ersten Position den Warmhaltethermostat (16"; 16"') und in einer zweiten Position einen elektrischen Nebenschluss parallel zum Warmhaltethermostat (16"; 16"') zu versorgen.

4. Gerät zur Dampfherstellung (10) nach einem der Ansprüche 1 bis 3, **dadurch gekennzeichnet, dass** die Steuerungsmittel (15; 15") eine Zeitschaltuhr (20; 20") umfassen, die mit der Schaltvorrichtung (17; 17") verbunden ist.

5. Gerät zur Dampfherstellung (10) nach Anspruch 4, **dadurch gekennzeichnet, dass** die Steuerungsmittel (15; 15") einen Wahlschalter (25; 25") umfassen, der mit dem Warmhaltethermostat (16; 16") in Serie geschaltet ist.

6. Gerät zur Dampfherstellung (10) nach einem der Ansprüche 2, 3 oder 5, **dadurch gekennzeichnet, dass** die Steuerungsmittel (15; 15'; 15"; 15"') einen Wahlknopf (26) umfassen, der vorgesehen ist, um den Wahlschalter (25) oder den Steuerschalter (18') oder den Wahlschalter (25") oder den Umschalter (19"') zu betätigen, wobei der Wahlknopf (26) eine Leuchtanzeigevorrichtung (28; 28'; 28"; 28"') trägt, die nur dann sichtbar ist, wenn der Wahlknopf (26) eine Position einnimmt, in der der Warmhaltethermostat (16; 16'; 16"; 16"') imstande ist, versorgt zu werden.

7. Gerät zur Dampfherstellung (10) nach Anspruch 6, **dadurch gekennzeichnet, dass** der Wahlknopf (26) drehbar befestigt ist.

8. Heizsockel (2) für ein Elektrohaushaltsgerät zum Dampfgaren, in dem ein Gerät zur Dampfherstellung (10) untergebracht ist, das einen Wasserbehälter (11) umfasst, der mit einem Heizelement (12) verbunden ist, das von Steuerungsmitteln (15; 15'; 15"; 15"') geregelt wird, **dadurch gekennzeichnet, dass** das Gerät zur Dampfherstellung (10) einem der Ansprüche 1 bis 7 entspricht.

9. Elektrohaushaltsgerät zum Dampfgaren, umfassend einen Garraum (1), der über einem Heizsockel (2) angeordnet ist, **dadurch gekennzeichnet, dass** der Heizsockel (2) dem Anspruch 8 entspricht.

10. Elektrohaushaltsgerät zum Dampfgaren, umfassend ein Gerät zur Dampfherstellung (10), das einen Wasserbehälter (11) umfasst, der mit einem Heizelement (12; 12'; 12"; 12"') verbunden ist, das von Steuerungsmitteln (15; 15'; 15"; 15"') geregelt wird, und einen Garraum (1), der vom Gerät zur Dampfherstellung (10) mit Dampf versorgt wird, **dadurch gekennzeichnet, dass** das Gerät zur Dampfherstellung (10) einem der Ansprüche 1 bis 7 entspricht.
